(19) Europäisches Patentamt
European Patent Office
Office européen des brevets

(11) **EP 4 357 094 A1**

(12) **EUROPEAN PATENT APPLICATION**

(43) Date of publication:
**24.04.2024   Bulletin 2024/17**

(21) Application number: **22306592.1**

(22) Date of filing: **20.10.2022**

(51) International Patent Classification (IPC):
**B28C 5/38** *(2006.01)*      **B28B 19/00** *(2006.01)*
**B28C 7/16** *(2006.01)*      **C04B 38/10** *(2006.01)*

(52) Cooperative Patent Classification (CPC):
**B28B 19/0092; B28C 5/06; B28C 7/0413;
B28C 7/16; C04B 38/106**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SAINT-GOBAIN PLACO**
**92400 Courbevoie (FR)**

(72) Inventors:
• **SAINGIER, Guillaume**
  **93300 Aubervilliers (FR)**

• **RANZANI DA COSTA, Andrea**
  **92400 Courbevoie (FR)**
• **JAFFEL, Hamouda**
  **92400 Courbevoie (FR)**
• **HESSOVA, Martina**
  **180 00 Praha 8 (CZ)**
• **KAMLER, Radomir**
  **180 00 Praha 8 (CZ)**

(74) Representative: **Murgitroyd & Company**
**165-169 Scotland Street**
**Glasgow G5 8PL (GB)**

(54) **APPARATUS AND METHOD FOR MANUFACTURING CEMENTITIOUS SLURRY COMPRISING FOAM**

(57)   According to the present invention, there is provided an apparatus (100) for manufacturing a cementitious slurry comprising foam, the apparatus comprising; a mixing chamber (101) for mixing a cementitious material and water to form a cementitious slurry, a channel (103) fluidly connected to the mixing chamber (101) at a first end (111), the channel (103) for receiving a cementitious slurry from the mixing chamber (101). In the apparatus (100), the channel (103) extends from the first end (111) and terminates at at least one second end (112). The channel (103) comprises a first foam inlet (106) for introducing foam into the channel (103). The channel further comprises a second foam inlet for introducing foam into the channel (103). A method using the apparatus (100) is also described.

Fig. 1

**Description**

**FIELD OF THE INVENTION**

The present invention relates to apparatus for manufacturing a cementitious slurry comprising foam. The present invention also relates to a method of manufacturing a cementitious slurry comprising foam using the apparatus.

**BACKGROUND TO THE INVENTION**

Gypsum occurs naturally as a raw material in the form of calcium sulphate dihydrate ($CaSO_4\ 2(H_2O)$). Gypsum containing products, such as plasterboard, are prepared by forming a mixture of calcined or dehydrated gypsum, namely calcium sulphate hemihydrate ($CaSO_4\ 0.5(H_2O)$), with water, to form a settable slurry that is then cast into a pre-determined shape. The calcium sulphate hemihydrate reacts with the water and becomes re-hydrated to the dihydrate crystal, which is then cured or dried to the solid state.

Due their versatility, desirable mechanical properties and the possibility of achieving a high level of finish, gypsum products are commonly found throughout buildings. As such, there is a desire to produce lightweight gypsum products. A reduction in the quantity of gypsum used substantially reduces the resource demand of the manufacturing process, therefore reducing material costs. As such, the weight of these gypsum products is of great importance.

To provide a lightweight gypsum product, foam can be added to the settable slurry. However, the introduction of foam into the slurry can cause shearing and dispersion of the foam. Such dispersion leads to high foam losses, creating an inefficient process that can limit the extent of the density reduction achieved using this method. Foam losses are particularly prevalent when introducing a large amount of foam into the slurry.

**SUMMARY OF THE INVENTION**

According to a first aspect of the present invention, there is provided an apparatus for manufacturing a cementitious slurry comprising foam, the apparatus comprising; a mixing chamber for mixing a cementitious material and water to form a cementitious slurry, a channel fluidly connected to the mixing chamber at a first end, the channel for receiving a cementitious slurry from the mixing chamber, the channel extending from the first end and terminating at at least one second end; the channel comprising a first foam inlet for introducing foam into the channel; and the channel further comprising a second foam inlet for introducing foam into the channel.

The present invention provides an apparatus for efficiently and consistently combining foam with a cementitious slurry, such as a stucco or gypsum slurry. The foam experiences adequately low shear forces when combined with the slurry via multiple inlets in the channel, preserving the foam stability. In the prior art, the mixing means inside the mixing chamber may impose very high shear rates within the slurry. These high shear rates can break up the bubbles and destabilise any foam in the mixing chamber. Therefore, introducing foam into the cementitious slurry in the mixing chamber can lead to high levels of foam loss. The present invention addresses this problem of the prior art, as the use of first and second foam inlets within the channel ensures the foam is evenly mixed throughout the cementitious slurry with low levels of foam loss.

Preferably, the mixing chamber is a tangential mixer. Preferably, the tangential mixer comprises a single mixing member. Alternatively, the tangential mixer comprises a plurality of mixing members.

Preferably, the first foam inlet is located in the bottom half of the channel. Alternatively, the first foam inlet is located in the top half of the channel. Alternatively, the first foam inlet is located at the vertical midpoint of the channel.

Preferably, the first foam inlet is positioned on an outer wall of the channel, wherein the outer wall extends tangentially from the mixing chamber. Preferably, where the mixing chamber is a tangential mixer, the first foam inlet is positioned on an outer wall of the channel, wherein the outer wall extends tangentially from the tangential mixer.

Preferably, the second foam inlet is positioned on a wall of the channel that substantially opposes the outer wall. The walls of the channel may be continuous, as is the case if a channel is circular, or distinct, as in the case where the channel is rectangular or square.

Preferably, the first foam inlet is positioned on a channel wall that substantially opposes the channel wall where the second foam inlet is positioned. Preferably, the second foam inlet is positioned on the substantially opposite side of the channel to the first foam inlet.

Preferably, the first foam inlet and the second foam inlet are located at the same vertical position within the channel. In such a configuration, the first foam inlet and the second foam inlet may lie on the same horizontal plane of the channel. Where the first foam inlet and the second foam inlet lie at the same vertical position within the channel, either the distance between the base of the channel and the first foam inlet and the base of the channel and the second foam inlet will be the same, or the distance between the top of the channel and the first foam inlet and the top of the channel and the second foam inlet will be the same.

Preferably, the first foam inlet and the second foam inlet are positioned at the vertical midpoint of the channel. Here, the distance between the top of the channel and the foam inlets is the same as the distance between the base of the channel and the foam inlets.

Preferably, the first foam inlet and the second foam inlet are offset along the length of the channel. Preferably, the offset is at least 30mm. More preferably, the offset is at least 50 mm. Still more preferably, the offset is at least 100 mm. Still more preferably, the offset is at least 150 mm.

Preferably, the first foam inlet is closer than the second foam inlet to the first end of the channel. Preferably, the distance between the first foam inlet and the first end of the channel is the same as the distance between the second foam inlet and the second end of the channel.

Preferably, the second foam inlet is located at least 200 mm from the first end of the channel. Preferably, the second foam inlet is located less than 250 mm from the first end of the channel.

Preferably, the maximum opening dimension of the first foam inlet and/or the second foam inlet is greater than or equal to 15 mm. More preferably, the maximum opening dimension of the first foam inlet and/or the second foam inlet is greater than or equal to 17.5 mm. Most preferably, the maximum opening dimension of the first foam inlet and/or the second foam inlet is greater than or equal to 20 mm.

Preferably, the maximum opening dimension of the first foam inlet is less than or equal to 25 mm. More preferably, the maximum opening dimension of the first foam inlet is less than or equal to 20 mm. Most preferably, the maximum opening dimension of the first foam inlet is less than or equal to 17.5 mm.

Preferably, the apparatus is configured, in use, to introduce foam through the first foam inlet and the second foam inlet at 5.4 times or less the velocity of the cementitious slurry in the channel. More preferably, the apparatus is configured, in use, to introduce foam through the first foam inlet and the second foam inlet at a velocity 3.4 times or less the velocity of the cementitious slurry in the channel. Still more preferably, the apparatus is configured, in use, to introduce foam through the first foam inlet and the second foam inlet at a velocity 2.4 times or less the velocity of the cementitious slurry in the channel. Most preferably, the apparatus is configured, in use, to introduce foam through the first foam inlet and the second foam inlet at a velocity 1.8 times or less the velocity of the cementitious slurry in the channel.

Preferably, the apparatus is configured, in use, to introduce foam through the first foam inlet and the second foam inlet at two times or more the velocity of the cementitious slurry in the channel. More preferably, the apparatus is configured, in use, to introduce foam through the first foam inlet and the second foam inlet at a velocity three times or more the velocity of the cementitious slurry in the channel. Still more preferably, the apparatus is configured, in use, to introduce foam through the first foam inlet and the second foam inlet at a velocity four times or more the velocity of the cementitious slurry in the channel.

Preferably, the apparatus is configured, in use, to introduce foam through the first foam inlet and the second foam inlet at a velocity between 1.8 and 5.4 times inclusive the velocity of the cementitious slurry in the channel. More preferably, the apparatus is configured, in use, to introduce foam through the first foam inlet and the second foam inlet at a velocity between 1.8 and 3.4 times inclusive the velocity of the cementitious slurry in the channel. Still more preferably, the apparatus is configured, in use, to introduce foam through the first foam inlet and the second foam inlet at a velocity between 2.4 and 3.4 times inclusive the velocity of the cementitious slurry in the channel. Most preferably, the apparatus is configured, in use, to introduce foam through the first foam inlet and the second foam inlet at a velocity 2.4 times the velocity of the cementitious slurry in the channel.

Preferably, the at least one second end of the channel is connected to a distribution hose. Preferably, the channel comprises a single second end.

Preferably, the at least one second end of the channel is connected to a secondary chamber.

Preferably, the channel is substantially straight. Alternatively, the channel is substantially curved. Preferably, the channel has a substantially similar cross sectional area throughout its length. Preferably, the channel has a substantially similar cross sectional shape throughout its length. More preferably, the channel has a substantially similar cross sectional area and substantially similar cross sectional shape throughout its length.

Preferably, the apparatus comprises a third foam inlet. More preferably, the apparatus comprises a fourth foam inlet. In select embodiments, the plurality of foam inlets consists of four foam inlets.

Preferably, the four foam inlets are positioned along two orthogonal axes. More preferably, the orthogonal axes are offset along the length of the channel.

Preferably, the four foam inlets are evenly spaced along the length of the channel. More preferably, the four foam inlets are evenly spaced along the length of a portion of the channel.

Preferably, none of the four foam inlets directly opposes another of the four foam inlets. Preferably, the four foam inlets are positioned at 90 degrees to one another around the perimeter of the channel.

Preferably, the axis of at least one foam inlet at the point where it joins the channel is perpendicular to the axis of the channel. More preferably, the axis of all foam inlets at the point where they join the channel are perpendicular to the axis of the channel. As such, there is improved dispersion of the foam within the channel. Preferably, the axis of at least one foam inlet at the point where it joins the channel intersects the axis of the channel.

Preferably, the first foam inlet has a substantially circular cross-section. In this case, the maximum opening dimension is the diameter of the circle. Alternatively, the first foam inlet has a substantially square or rectangular cross-section. In this case, the maximum opening dimension is the diagonal.

Preferably, the second foam inlet has a substantially circular cross-section. In this case, the maximum opening dimension is the diameter of the circle. Alternatively, the second foam inlet has a substantially square or rectangular cross-section. In this case, the maximum opening dimension is the diagonal.

Preferably, the channel comprises a circular cross section. Alternatively, the channel comprises a rectangular or square cross section.

Preferably, the cementitious material comprises at least one of calcium sulphate hemihydrate and calcium sulphate dihydrate. More preferably, the cementitious material consists essentially of calcium sulphate hemihydrate.

According to a second aspect of the present invention, there is provided a method of manufacturing a cementitious slurry comprising foam, the method comprising; providing the apparatus as hereinbefore described; introducing a cementitious material and water into the mixing chamber to form a cementitious slurry; and introducing foam into the cementitious slurry via the first foam inlet and the second foam inlet.

In this way there is provided a method for efficiently and consistently combining foam with a cementitious slurry, such as a stucco or gypsum slurry. The foam experiences adequately low shear forces when combined with the slurry, preserving the foam stability. In the prior art, the mixing means inside the mixing chamber may impose very high shear rates within the slurry. These high shear rates can break up the bubbles and destabilise any foam in the mixing chamber. Therefore, introducing foam into the cementitious slurry in the mixing chamber can lead to high levels of foam loss. The present invention addresses this problem of the prior art, as the use of multiple foam inlets ensures the foam is evenly mixed throughout the cementitious slurry with low levels of foam loss.

Preferably, the foam is introduced to the cementitious slurry at a velocity 5.4 times or less the velocity of the cementitious slurry in the channel. More preferably, the foam is introduced to the cementitious slurry at a velocity 3.4 times or less the velocity of the cementitious slurry in the channel. Still more preferably, the foam is introduced to the cementitious slurry at a velocity 2.4 times or less the velocity of the cementitious slurry in the channel, Yet more preferably, the foam is introduced to the cementitious slurry at a velocity 1.8 times or less the velocity of the cementitious slurry in the channel,

Preferably, the foam is introduced to the cementitious slurry at a velocity two times or more the velocity of the cementitious slurry in the channel. More preferably, the foam is introduced to the cementitious slurry at a velocity three times or more the velocity of the cementitious slurry in the channel. Still more preferably the foam is introduced to the cementitious slurry at a velocity four times or more the velocity of the cementitious slurry in the channel.

Preferably, the foam is introduced to the cementitious slurry at a velocity between 1.8 and 5.4 times inclusive the velocity of the cementitious slurry in the channel. Still more preferably, the foam is introduced to the cementitious slurry at a velocity between 1.8 and 3.4 times inclusive the velocity of the cementitious slurry in the channel. Still more preferably, the foam is introduced to the cementitious slurry at a velocity between 2.4 and 3.4 times inclusive the velocity of the cementitious slurry in the channel. Most preferably, the foam is introduced to the cementitious slurry at a velocity 2.4 times the velocity of the cementitious slurry.

DETAILED DESCRIPTION

Embodiments of the present invention will now be described by way of example only and with reference to the accompanying drawings, in which:

Figure 1 depicts an apparatus in accordance with the first embodiment of the present invention;

Figure 2 depicts a schematic view of a method in accordance with a second aspect of the present invention;

Figure 3 depicts a theoretical Foam Efficiency Factor (FEF)-distance graph to indicate the foam stability for various distances of the foam inlet along the apparatus;

Figure 4 depicts a theoretical Foam Efficiency Factor (FEF)-diameter graph to indicate the foam stability for various foam inlet diameters;

Figure 5 depicts a density deviation-diameter graph to indicate the mixing homogeneity of the foam and cementitious slurry mixture for various foam inlet diameters;

Figure 6 depicts foam inlet configurations within the scope of the invention;

Figure 7 is a graph depicting the influence of various foam inlet configurations on the density deviation measured within the slurry-foam mixture; and

Figure 8 depicts a shear rate-distance and density deviation-distance graph to indicate the shear forces experienced by the foam and the mixing homogeneity of the foam and cementitious slurry mixture for various distances of the foam inlet along the apparatus

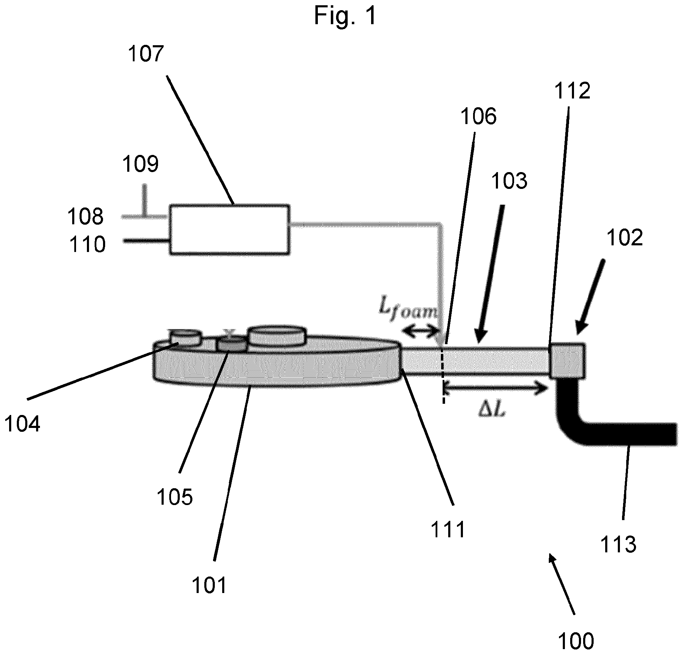

Figure 1 illustrates an apparatus 100 for manufacturing a cementitious slurry comprising foam. The apparatus 100 comprises a mixing chamber 101 and a secondary chamber 102, the secondary chamber comprising a canister. The mixing chamber 101 is connected to the secondary chamber 102 by a channel 103.

The mixing chamber 101, here a tangential mixer, comprises a cementitious material inlet 104 for introducing at least one cementitious material, such as calcium sulphate hemihydrate or stucco, into the mixing chamber 101 and a first water inlet 105 for introducing water into the mixing chamber 101. In this way, a cementitious material and water can be introduced into the mixing chamber 101. The mixing chamber comprises a mixing member, the mixing member comprising a plurality of blades or teeth. In use, the mixing member rotates within the mixing chamber 101, combining the water and the cementitious material to form a cementitious slurry. After its formation, the cementitious slurry can exit the mixing chamber 101 and enter the channel 103 via the mixing chamber outlet 111. The mixing chamber outlet 111 ensures the channel 103 is in fluid communication with the mixing chamber 101, such that the cementitious slurry can pass freely from the mixing chamber 101 into the channel 103. The mixing chamber outlet 111 represents the first end of the channel 103.

The channel 103 comprises a foam inlet 106 for introducing foam into the channel 103. The foam intlet 106 is fluidly connected to the channel 103, ensuring that, in use, foam can freely enter the channel 103 through the foam inlet 106. In use, foam is injected into the channel 103 via the foam inlet 106. In this way, downstream of the foam inlet 106, the channel comprises an increasingly uniform mixture of cementitious slurry and foam.

In the illustrated embodiment, the foam is a preformed aqueous foam generated in a foam generator 107. The foam generator comprises a second water inlet 108 for introducing water into the foam generator 107, a soap inlet 109 for introducing soap into the foam generator 107 and an air inlet 110 for introducing air into the foam generator 107. The paths of the second water inlet 108 and soap inlet 109 join and combine before entering the foam generator 107. Air, water and soap are introduced into the foam generator 107 to generate a foam.

The channel 103 extends from the mixing chamber outlet 111 and is substantially straight. The channel 103 terminates at a second end, this second end being a secondary chamber inlet 112. As such, the cementitious slurry exiting the mixing chamber 101 via the mixing chamber outlet 111 and the foam entering the channel via the foam inlet 106 are combined and mixed as they flow along the channel 103. The mixed foam and cementitious slurry then exits the channel 103 and enters a secondary chamber 102 via the secondary chamber inlet 112. In the secondary chamber 102, the cementitious slurry and the foam are mixed further. When foam is injected directly into the mixing chamber 101, the stability of the bubbles is reduced due to the movement of the mixing arm and the shear forces present in the mixing chamber 101. Therefore, to reduce bubble impairment, the foam inlet 106 is located in the channel 103 downstream of the mixing chamber outlet 111.

The foam inlet 106 is positioned such that the distance between the first end of the channel 103, namely the end located adjacent the mixing chamber outlet 111, and the foam inlet 106 is 100 mm. In this embodiment the foam inlet is circular with a diameter of 15 mm.

The secondary chamber 102 is connected to a distribution hose 113. The cementitious slurry and foam stream exiting the channel 103 and entering the secondary chamber 102 via the secondary chamber inlet 112 is further mixed as it traverses through the secondary chamber 102, before exiting the secondary chamber 102 via distribution hose 113. As such, there is a continuous fluid connection between the mixing chamber 101 and the distribution hose 113, this fluid connection continuing through the mixing chamber outlet 111, the channel 103, the secondary chamber inlet 112 and the secondary chamber 102. In this embodiment, the distribution hose 113 divides at a point along its length such that it comprises a pair of elongate portions each comprising a distribution hose exit. Whilst in the present embodiment the distribution hose 113 is connected to the secondary chamber 102, in alternative embodiments it is envisaged that the distribution hose 113 may be connected directly to the channel 103, such that the secondary chamber 102 is omitted from the apparatus.

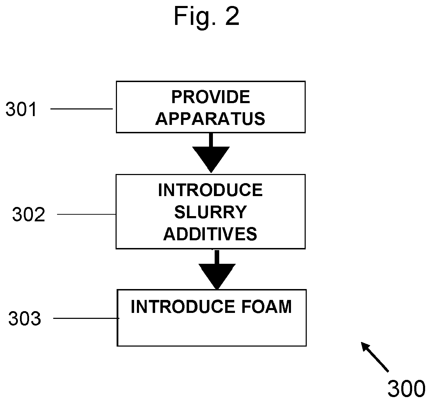

The present invention further relates to a method 300 of manufacturing a cementitious slurry comprising foam, as illustrated in Figure 2. The method comprises a PROVIDE APPARATUS step 301, wherein an apparatus as hereinbefore described is provided.

There follows an INTRODUCE SLURRY ADDITIVES step 302, wherein cementitious material and water are introduced into the slurry chamber via their respective inlets. Next, a foam can be introduced into the cementitious slurry in the channel via the foam inlet in an INTRODUCE FOAM step 303.

Computer modelling was undertaken to demonstrate the advantages of the hereinbefore described apparatus and method.

SHEAR RATE

Foam stability is evaluated by the Foam Efficiency Factor (FEF), wherein the FEF is calculated using the equation:

$$FEF = \frac{Volume\ of\ air\ in\ the\ manufactured\ product}{Volume\ of\ air\ in\ the\ foam}$$

An FEF of 100 is preferable as this indicates the conservation of all foam during manufacture of the cementitious product.

Foam stability and bubble breakage within the foam can also be indicated by the ratio between shear forces and surface tension. The shear forces act to break the bubbles within the foam and the surface tension provides resistance to the shear forces. The stability of each bubble depends on the shear rate and the bubble size and can be defined by the Capillary number (Ca):

$$Ca = \frac{\mu_{eff}\ \dot{\gamma}\ R_b}{\sigma}$$

Where $\mu_{eff}$ is the effective viscosity of the cementitious slurry, $\dot{\gamma}$ is the local shear rate, $R_b$ is the bubble radius and $\sigma$ is the surface tension of the bubble. Each bubble remains stable below a critical value of Ca. It has been found that 100 $\mu$m bubbles within the aqueous foam are stable for at shear rates below 3700 s$^{-1}$ and, therefore, 3700 s$^{-1}$ is often taken as the critical shear rate in such systems

A theoretical FEF can be calculated using the assumption that foam is lost if exposed to a shear rate higher than the critical value shear rate during the process of introduction into the cementitious slurry.

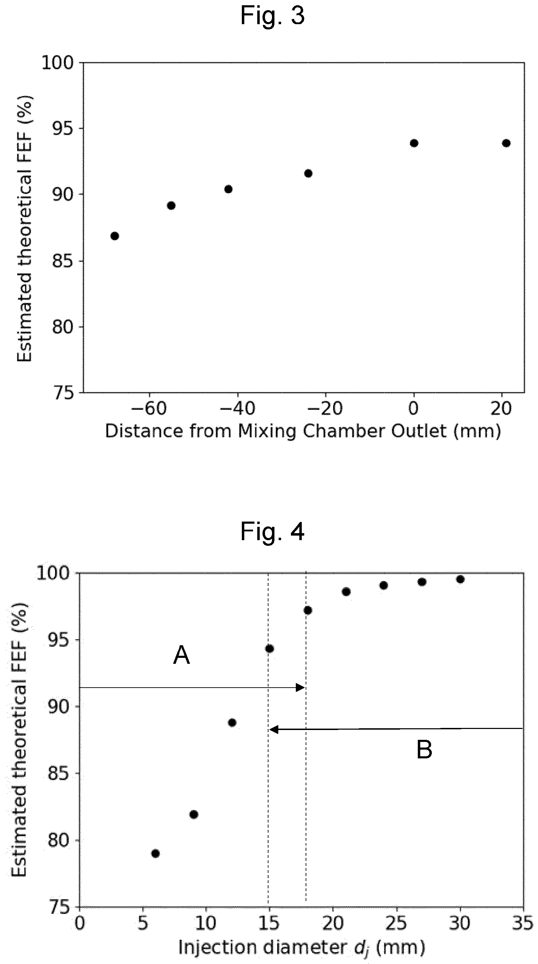

Computer simulations considering an apparatus comprising a channel and a single foam inlet were undertaken to assess how the distance of the foam inlet from the mixing chamber affected the shear forces experienced by the foam and the foam stability. Figure 3 depicts the estimated theoretical FEF (%) at the point of entry of the foam into the channel for a number of locations of the foam inlet.

For a tangential mixer, a portion of the channel extends beyond the first end of the channel and is located in the mixing chamber. It is understood that the first end of the channel is the point at which the entire channel cross-section exits the mixing chamber. Therefore, a negative distance value indicates the foam inlet is located in the portion of the channel located within the mixing chamber. To obtain the data for Figure 3, the channel was modelled as having a square cross section with dimensions of 39 mm by 39 mm.

The numerical modelling of slurry-foam blending was undertaken using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer.

As can be seen from Figure 3, a foam entering from an inlet located within the channel experiences greater foam stability compared to foam introduced into the mixing chamber. This increase in FEF is preferable as a reduced quantity of foam is destroyed during manufacture of the cementitious product. A higher FEF increases the overall efficiency of the manufacturing process.

**DENSITY DEVIATION**

To assess the homogeneity of the slurry-foam mixture, and therefore the quality of mixing of the cementitious slurry and the foam, the computed variations in the density of the slurry-foam mixture at various potions within the channel can be considered. In these computations, a higher degree of density variation measured at a given point indicates a reduced homogeneity of the slurry-foam mixture. As such, a low degree of density variation is desirable, as this indicates the apparatus will provide a more consistent product.

To calculate the homogeneity of slurry-foam mixture, the flow of the cementitious slurry, foam and slurry-foam mixture was modelled. Transverse sections through the channel were taken, and the mean density and the standard deviation of the density within each transverse section were calculated. The mean density is taken across a volume or section area, and is not the mean density over time. The density deviation was subsequently calculated, the density deviation defined as:

$$\text{Density deviation [\%]} = 100 \times \frac{\text{Density Standard Deviation}}{\text{Mean Density}}$$

Perfect homogeneity within the slurry-foam mixture results in a density deviation of zero.

**FOAM INLET DIAMETER**

Computer modelling of the foam inlet diameter was undertaken to assess the impact of inlet diameter on the density deviation.

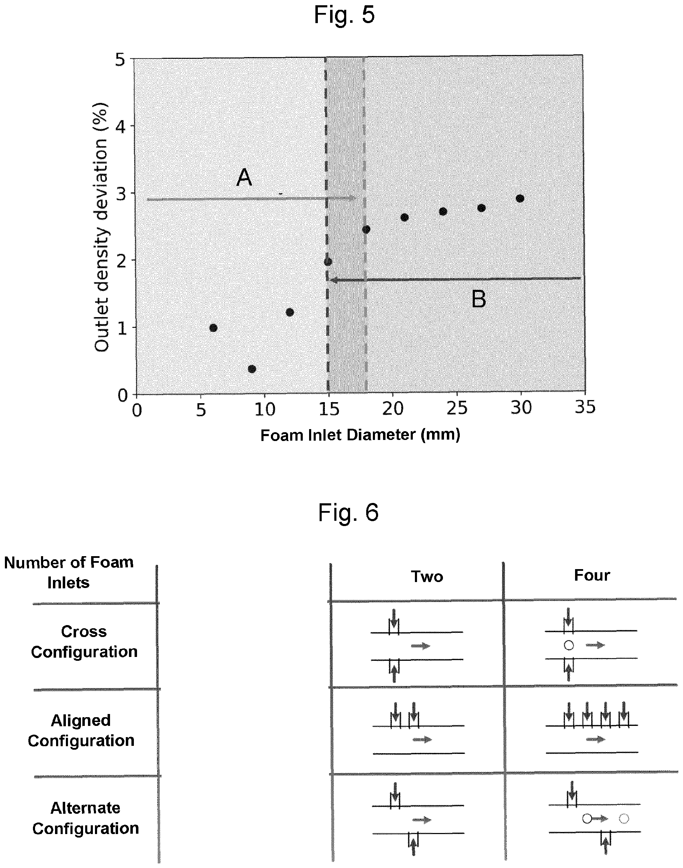

When choosing the foam inlet diameter within an apparatus, there is a compromise made between the mixing efficiency, which requires high shear rates for the foam to mix with the cementitious slurry, and the stability of foam, which is negatively affected by high shear rates. The effect of the foam inlet diameter of the mean shear rate experienced by the foam at the point of entry into the slurry stream and the density deviation at the second end (outlet) of the channel is illustrated in Figures 4 and 5, respectively. To obtain the data for Figures 4 and 5, the channel was modelled as having a square cross section with dimensions of 39 mm by 39 mm.

Here, the numerical modelling of slurry-foam blending was undertaken using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer.

In the models, the volumetric flow rate of the foam was kept constant, at a rate of 0.004 $m^3s^{-1}$. The volumetric flow rate of the cementitious slurry after insertion of the foam was modelled as 0.10 $m^3s^{-1}$ with the slurry velocity modelled as 6.6 $ms^{-1}$. To inject the foam into the cementitious slurry stream at a constant flow rate, the variation in the foam inlet diameter requires a variation in the foam velocity at entry into the channel. As illustrated in Figures 4 and 5, a region of high mixing efficiency, A, and a region of high foam stability B are present.

From a review of Figure 4, it can be seen that the theoretical FEF experienced by the foam increases as the foam inlet diameter increases from 5 mm to 31 mm, reaching an acceptable level for plasterboard production when the foam inlet diameter is equal to 15 mm. Where the foam inlet diameter is increased above 17.5 mm, the mean shear rate experienced by the foam was no longer observed to decrease, with theoretical FEF remaining high. As such, the region of high foam stability, B, is found when the foam inlet diameter is 15 mm or greater.

As can be seen in Figure 5, it was found that the density deviation at the second end (outlet) of the channel progressively increases as the foam inlet diameter increases, with small inlet diameters leading to good penetration and mixing of the foam into the slurry stream. The region of high mixing efficiency, A, occurs up to inlet diameters of about 17.5 mm.

The crossover between the region of high mixing efficiency, A, and the region of high foam stability B, is present from an inlet diameter of approximately 15 mm to around 17.5 mm.

**VELOCITY RATIO**

It has been found that the ratio between the velocity of the foam entering the cementitious slurry stream and the velocity of the cementitious slurry stream at the point where the foam enters the slurry stream impacts the FEF of the final cementitious product.

**Table 1**

| Example | Foam Inlet Diameter (mm) | Foam Velocity ($ms^{-1}$) | Slurry Velocity ($ms^{-1}$) | Ratio of Foam Velocity to Slurry Velocity | FEF (%) | Outlet Density Deviation (%) |
|---------|--------------------------|---------------------------|------------------------------|-------------------------------------------|---------|------------------------------|
| Example A | 6 | 141.5 | 6.6 | 23.6 : 1 | 79.0 | 0.98 |

(continued)

| Example | Foam Inlet Diameter (mm) | Foam Velocity (ms$^{-1}$) | Slurry Velocity (ms$^{-1}$) | Ratio of Foam Velocity to Slurry Velocity | FEF (%) | Outlet Density Deviation (%) |
|---|---|---|---|---|---|---|
| Example B | 9 | 62.9 | 6.6 | 9.5: 1 | 82.0 | 0.37 |
| Example C | 12 | 35.4 | 6.6 | 5.4:1 | 88.7 | 1.20 |
| Example D | 15 | 22.6 | 6.6 | 3.4 : 1 | 94.3 | 1.95 |
| Example E | 18 | 15.7 | 6.6 | 2.4 : 1 | 97.2 | 2.43 |
| Example F | 21 | 11.6 | 6.6 | 1.8 : 1 | 98.6 | 2.60 |
| Example G | 24 | 8.8 | 6.6 | 1.3 : 1 | 99.0 | 2.69 |
| Example H | 27 | 7.0 | 6.6 | 1.1 : 1 | 99.3 | 2.74 |
| Example I | 30 | 5.7 | 6.6 | 0.9 : 1 | 99.5 | 2.87 |

From Table 1, it can be seen that a ratio of foam velocity to slurry velocity that is 5.4 or less provides acceptable foam stability (a sufficiently high FEF). It can also be seen that as the ratio of foam velocity to slurry velocity decreases, the FEF increases further, indicating increasing foam stability.

**FOAM INLET CONFIGURATION**

Further modelling was undertaken to assess the density deviation within the slurry-foam mixture for apparatus comprising channels with one, two and four foam inlets arranged in a plurality of configurations.

Three configurations were modelled; an aligned configuration wherein all foam inlets are arranged co-linearly along the length of the channel, a cross configuration wherein the foam inlets directly oppose one another, and an alternate configuration wherein the foam inlets are located on alternate sides along the length of the channel.

In the aligned configuration, the foam inlets were located at a 35 mm spacing (between the adjacent centres of each inlet) from one another, with a first foam inlet located adjacent to and 136 mm distance from the first end of the channel. Aligned configurations with two and four foam inlets were modelled.

In the cross configuration, each foam inlet is located 136 mm from the first end of the channel. In the two inlet cross configuration, a pair of opposing inlets are provided, an inlet located on either side of the channel. In the four inlet cross configuration, each inlet is located equidistant about the circumference of the channel, such that two pairs of opposing inlets are provided.

In the alternate configuration, the foam inlets are spaced apart along the channel length. In the two inlet alternate configuration, a pair of opposing inlets is provided, with a first foam inlet located 136 mm from the first end of the channel and a second foam inlet spaced 35 mm from the first inlet, in a direction away from the mixing chamber.

In the four inlet alternate configuration, each inlet is located equidistant about the circumference of the channel. A first foam inlet is located 136 mm from the mixing chamber. A second, third and fourth foam inlet are located along the channel in a direction away from the first end of the channel. The first to fourth foam inlet are located along the channel, with a 35 mm distance between each adjacent inlet.

During modelling, the foam was first introduced into the channel at a constant velocity of 22 ms$^{-1}$ through configurations with a constant total inlet area. During a second round of modelling, the foam was introduced into the channel through a foam inlet diameter of 15 mm at different velocities. All models used a consistent total volume flow rate.

The foam inlet configurations are illustrated in Figure 6 and detailed in Table 2.

**Table 2**

| Scenario | Number of Foam Inlets | Configuration | Foam Inlet Diameter (mm) | Total Inlet Area (mm²) | Foam Injection Velocity (ms⁻¹) | Volume Flow Rate (m³s⁻¹) | Ratio of foam velocity to slurry velocity |
|---|---|---|---|---|---|---|---|
| 1 | 2 | Alternate | 10.6 | 177 | 22.6 | 0.004 | 3.42:1 |
| 2 | 4 | Alternate | 7.5 | 177 | 22.6 | 0.004 | 3.42: 1 |
| 3 | 4 | Alternate | 15 | 708 | 5.7 | 0.004 | 0.9:1 |
| 4 | 2 | Alternate | 15 | 354 | 11.3 | 0.004 | 1.7:1 |
| 5 | 2 | Cross | 10.6 | 177 | 22.6 | 0.004 | 3.42 : 1 |
| 6 | 4 | Cross | 7.5 | 177 | 22.6 | 0.004 | 3.42 : 1 |
| 7 | 4 | Cross | 15 | 708 | 5.7 | 0.004 | 0.9:1 |
| 8 | 2 | Cross | 15 | 354 | 11.3 | 0.004 | 1.7:1 |
| 9 | 2 | Aligned | 10.6 | 177 | 22.6 | 0.004 | 3.42 : 1 |
| 10 | 4 | Aligned | 7.5 | 177 | 22.6 | 0.004 | 3.42 : 1 |
| 11 | 4 | Aligned | 15 | 708 | 5.7 | 0.004 | 0.9 : 1 |
| 12 | 2 | Aligned | 15 | 354 | 11.3 | 0.004 | 1.7:1 |
| Control | 1 | N/A | 15 | 177 | 22.6 | 0.004 | 3.42 : 1 |

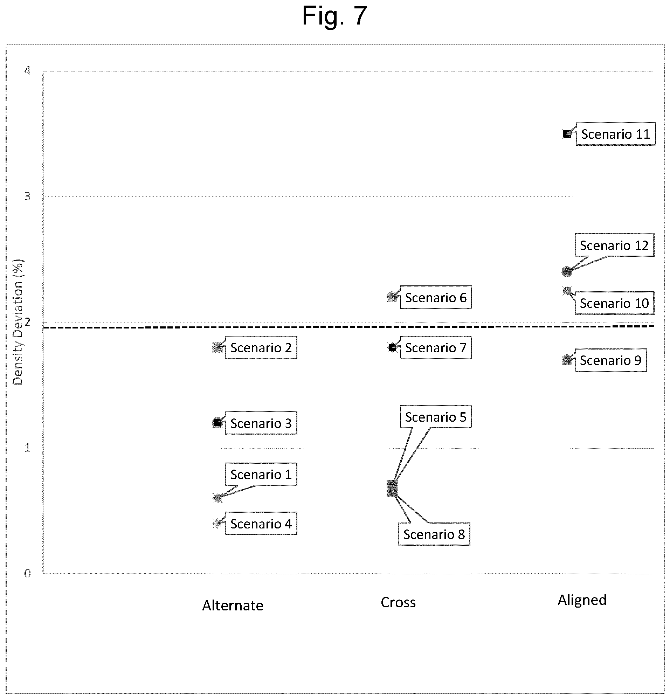

Figure 7 illustrates the modelled density deviation in the slurry-foam mixture at the second end (outlet) of the channel. To obtain the modelled data presented in Figure 7, the channel was considered to have a square cross section with 39 mm sides in all models. The velocity of the cementitious slurry after insertion of the foam was modelled as 6.6 ms⁻¹.

Here, the numerical modelling of slurry-foam blending was undertaken using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer.

In Figure 7, the calculated percentage density deviation is plotted for each scenario. The calculated density deviation for the control scenario is plotted across the graph as a dashed line.

As can be seen from Table 2 and Figure 7, the cross and alternate inlet configurations generally demonstrate an improved homogeneity in the slurry-foam mixture compared with the aligned configurations. In other words, the modelled density deviation is lower for the cross and alternate configurations when these are compared with the equivalent aligned configurations.

It can also be seen from Table 2 and Figure 7 that the alternate inlet configurations generally demonstrate an improved homogeneity in the slurry-foam mixture compared with the cross configurations. In other words, the modelled density deviation is lower for the alternate configurations when these are compared with the equivalent cross configurations. It is notable that all alternate configurations prove a reduced density deviation in the slurry-foam mixture than the control scenario.

It can also be deduced from Table 2 and Figure 7 that increasing the number of foam inlets whilst retaining the same total inlet area and foam injection velocity increases the modelled density deviation. Such an observation is consistent across all three configurations, as can be seen from comparing Scenarios 1 and 2, Scenarios 5 and 6 and Scenarios 9 and 10.

**POSITIONING A SECOND INLET**

Considering configurations with multiple inlets, the presence of two or more inlets allows the velocity of the foam entering the cementitious slurry to be reduced whilst maintaining a constant volumetric flow rate of the foam entering the slurry stream, for a fixed foam inlet diameter. It was further investigated how the distance between the first end of the channel and the second foam inlet, namely the foam inlet distal the mixing chamber, affected the homogeneity and stability of the foam. By locating the second foam inlet away from the mixing chamber, the speed of the slurry stream due to rotation of the mixing members of the mixing chamber is reduced, such that the shear rate endured by the foam on entry into the slurry stream is reduced. As such, the foam efficiency factor can be increased, although the density deviation in the slurry-foam mixture increases as the shear rate is reduced.

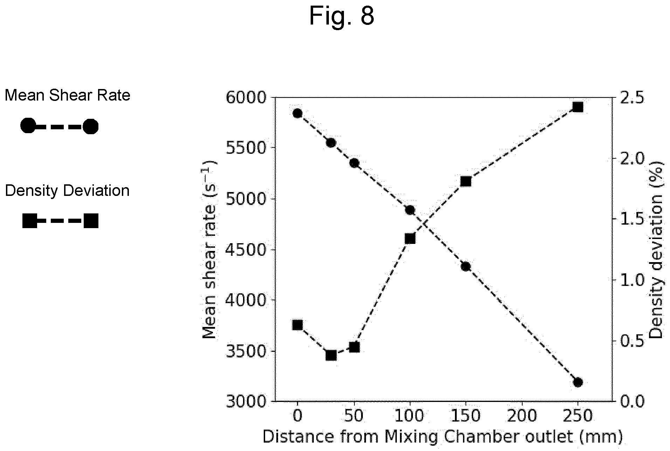

Figure 8 illustrates the mean shear rate experienced by the foam at the point of entry into the slurry stream and the density deviation at the second end (outlet) of the channel against the location of the second foam inlet from the mixing chamber, for the configuration of Scenario 4. The velocity ratio was modelled as 1.7:1. It is understood that the second foam inlet is the foam inlet distal the mixing chamber. Again, there is a compromise made between the mixing efficiency, which requires high shear rates for the foam to mix with the cementitious slurry, and the stability of foam, which is negatively affected by high shear rates.

It was found that the when the second foam inlet was greater than 200 mm from the first end of the channel, the shear rate experienced by the foam fell below the critical value of 3700 $s^{-1}$. As such, positioning the second foam inlet 250 mm or further from the first end of the channel assists in improving the foam efficiency factor. However, as the shear rate experienced by the foam decreases as the position of the second inlet becomes further from the first end of the channel, the modelled density deviation became unacceptable when the second foam inlet was positioned more than 250 mm from the first end of the channel. As such, locating the second foam inlet in this region of the channel can provide a good balance between density deviation and foam efficiency.

**Claims**

1. Apparatus for manufacturing a cementitious slurry comprising foam, said apparatus comprising;

   a mixing chamber for mixing a cementitious material and water to form a cementitious slurry,
   a channel fluidly connected to said mixing chamber at a first end, said channel for receiving a cementitious slurry from said mixing chamber,
   said channel extending from said first end and terminating at at least one second end;
   said channel comprising a first foam inlet for introducing foam into said channel;
   and said channel further comprising a second foam inlet for introducing foam into said channel.

2. The apparatus of claim 1, wherein said mixing chamber is a tangential mixer.

3. The apparatus of claim 1 or claim 2, wherein said first foam inlet is positioned on an outer wall of said channel, wherein said outer wall extends tangentially from said mixing chamber.

4. The apparatus of any one preceding claim, wherein said second foam inlet is positioned on the substantially opposite side of said channel to said first foam inlet.

5. The apparatus of any one preceding claim, wherein said first foam inlet and said second foam inlet are located at the same vertical position within said channel.

6. The apparatus of any one preceding claim, wherein said first foam inlet and said second foam inlet are offset along the length of the channel.

7. The apparatus of claim 6, wherein said offset is at least 50 mm, more preferably at least 100 mm, most preferably at least 150 mm.

8. The apparatus of claim 6 or claim 7, wherein said first foam inlet is closer than said second foam inlet to said first end of said channel.

9. The apparatus of any one preceding claim, wherein the maximum opening dimension of said second foam inlet is greater than or equal to 15 mm.

10. The apparatus of any one preceding claim, wherein said at least one second end of said channel is connected to a distribution hose.

11. The apparatus of any one preceding claim, wherein said at least one second end of said channel is connected to a secondary chamber.

12. The apparatus of any one preceding claim, wherein the apparatus is configured, in use, to introduce foam through said first foam inlet and said second foam inlet at a velocity 5.4 or less times the velocity of said cementitious slurry in said channel, more preferably at a velocity 3.4 times or less the velocity of said cementitious slurry in said channel, still more preferably at a velocity 2.4 times or less the velocity of said cementitious slurry in said channel, most preferably at a velocity 1.8 times or less the velocity of said cementitious slurry in said channel.

13. A method of manufacturing a cementitious slurry comprising foam, said method comprising;

providing the apparatus of any one preceding claim;
introducing a cementitious material and water into said mixing chamber to form a cementitious slurry; and
introducing foam into said cementitious slurry via said first foam inlet and said second foam inlet.

14. A method according to claim 13, wherein said foam is introduced to said cementitious slurry at a velocity 5.4 times or less the velocity of the cementitious slurry, more preferably at a velocity 3.4 times or less the velocity of said cementitious slurry in said channel, still more preferably at a velocity 2.4 times or less the velocity of said cementitious slurry in said channel, most preferably at a velocity 1.8 times or less the velocity of said cementitious slurry in said channel.

15. A method according to claim 13 or claim 14, wherein said foam is introduced to said cementitious slurry at a velocity two times or more the velocity of the cementitious slurry, more preferably at a velocity three times or more the velocity of said cementitious slurry in said channel, still more preferably at a velocity four times or more the velocity of said cementitious slurry in said channel.

## Fig. 1

## Fig. 2

301 —— | PROVIDE APPARATUS |

302 —— | INTRODUCE SLURRY ADDITIVES |

303 —— | INTRODUCE FOAM |

300

# Fig. 3

# Fig. 4

## Fig. 5

## Fig. 6

# Fig. 7

# Fig. 8

Mean Shear Rate

Density Deviation

Europäisches
Patentamt

European
Patent Office

Office européen
des brevets

# EUROPEAN SEARCH REPORT

Application Number

EP 22 30 6592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/308432 A1 (WITTBOLD JAMES R [US] ET AL) 22 December 2011 (2011-12-22) <br> * paragraphs [0022], [0025], [0028] * <br> * paragraphs [0048], [0049] * <br> * figures 1, 2, 5, 6, 8 * <br> ----- | 1-8,10, 13 | INV. <br> B28C5/38 <br> B28B19/00 <br> B28C7/16 <br> C04B38/10 |
| X | US 2015/197036 A1 (WITTBOLD JAMES [US] ET AL) 16 July 2015 (2015-07-16) <br> * paragraphs [0068], [0069], [0071] - [0075] * <br> * paragraph [0114] * <br> * figures 6-8, 16-19 * <br> ----- | 1,4,5, 9-15 | |
| X | US 2003/117891 A1 (WITTBOLD JAMES R [US] ET AL) 26 June 2003 (2003-06-26) <br> * paragraphs [0034], [0035], [0054] * <br> * figures 1, 8, 9 * <br> ----- | 1,2,4,5, 10,13 | |

TECHNICAL FIELDS
SEARCHED       (IPC)

B28B
B28C
C04B
B01F

The present search report has been drawn up for all claims

| Place of search | Date of completion of the search | Examiner |
|---|---|---|
| The Hague | 27 March 2023 | Papakostas, Ioannis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................................
& : member of the same patent family, corresponding
    document

EPO FORM 1503 03.82 (P04C01)

## ANNEX TO THE EUROPEAN SEARCH REPORT
### ON EUROPEAN PATENT APPLICATION NO.

EP 22 30 6592

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2023

| Patent document cited in search report | Publication date | Patent family member(s) | Publication date |
|---|---|---|---|
| US 2011308432 A1 | 22-12-2011 | US 2006244183 A1 | 02-11-2006 |
|  |  | US 2011308432 A1 | 22-12-2011 |
| US 2015197036 A1 | 16-07-2015 | AR 099108 A1 | 29-06-2016 |
|  |  | AU 2015206642 A1 | 11-08-2016 |
|  |  | BR 112016015632 A2 | 08-08-2017 |
|  |  | CA 2936240 A1 | 23-07-2015 |
|  |  | CL 2016001712 A1 | 02-12-2016 |
|  |  | CN 105848840 A | 10-08-2016 |
|  |  | EP 3094459 A1 | 23-11-2016 |
|  |  | ES 2759235 T3 | 08-05-2020 |
|  |  | JP 6591985 B2 | 16-10-2019 |
|  |  | JP 2017510473 A | 13-04-2017 |
|  |  | KR 20160108372 A | 19-09-2016 |
|  |  | MX 368406 B | 02-10-2019 |
|  |  | NZ 722510 A | 24-12-2021 |
|  |  | PE 20160893 A1 | 28-08-2016 |
|  |  | RU 2016131422 A | 20-02-2018 |
|  |  | TW 201527059 A | 16-07-2015 |
|  |  | UA 120045 C2 | 25-09-2019 |
|  |  | US 2015197036 A1 | 16-07-2015 |
|  |  | WO 2015108851 A1 | 23-07-2015 |
| US 2003117891 A1 | 26-06-2003 | CA 2446672 A1 | 30-01-2003 |
|  |  | EP 1417081 A1 | 12-05-2004 |
|  |  | MX PA03011139 A | 26-02-2004 |
|  |  | NZ 529470 A | 28-10-2005 |
|  |  | US 6494609 B1 | 17-12-2002 |
|  |  | US 2003117891 A1 | 26-06-2003 |
|  |  | WO 03008167 A1 | 30-01-2003 |

EPO FORM P0459

For more details about this annex : see Official Journal of the European Patent Office, No. 12/82